# EUROPEAN PATENT APPLICATION

(11) **EP 1 821 000 A2**
(43) Date of publication of application: **22.08.2007**
(21) Application number: 06026805.9
(22) Date of filing: 22.12.2006
(51) Int. Cl.: F16H 19/02

(54) **Friction drive unit**

(30) Priority: 20.02.2006 JP 2006042868; 31.10.2006 JP 2006296296
(71) Applicant: Isel Co., Ltd., Yao-shi Osaka-fu 581-0068 (JP)
(72) Inventor: Mochizuki, Masanori, Yao-shi Osaka-fu 581-0068 (JP)
(74) Representative: Müller-Boré & Partner Patentanwälte

(57) **Abstract**

A friction drive unit for moving a table along a rail comprising: a pair of drive rollers for sandwiching a guide rail therebetween, one of the pair of the drive rollers being connected to a drive source; a pair of reverse rollers attached to roller shafts of the respective drive rollers so as to transmit rotation of the one drive roller connected to the drive source to the other drive roller; and two arm portions formed integrally with or separately from one another, the pair of the drive rollers being pivoted on the arm portions, respectively, wherein the two arm portions are resiliently deformable in such directions as to approach and move away from each other and are provided so that the pair of the drive rollers produce pressing forces to the guide rail.

## Description

### BACKGROUND OF THE INVENTION

### Field of the Invention

The present invention relates to a friction drive unit for moving a table along a rail.

### Description of the Related Art

As a drive mechanism for moving a table used for a grinder, an article carrying device, or the like along rails, there is a friction drive mechanism or the like utilizing a ball screw mechanism or rotation of a friction gear.

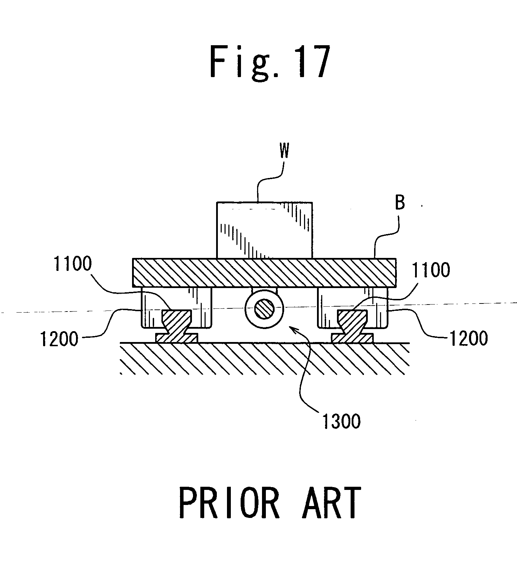

In the ball screw mechanism, as shown in FIG. 17, for example, a table B mounted onto rails 1100 through linear guides 1200 is provided with a ball screw 1300. By driving the ball screw 1300 for rotation by a servomotor, the table B moves. In FIG. 17, a reference numeral W denotes a workpiece supported or retained on the table B. (For example, Japanese Unexamined Patent Publication No. 8-105439)

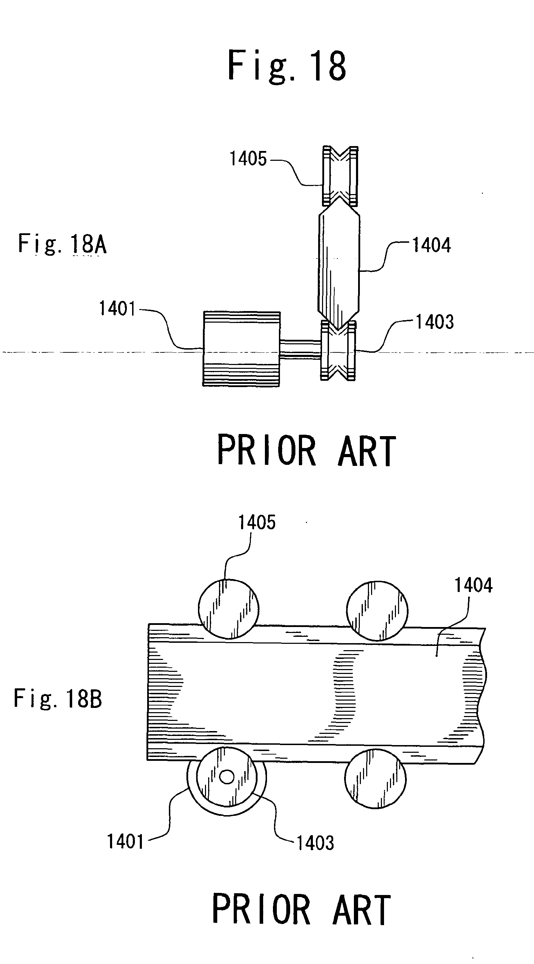

As a friction drive mechanism, there is a drive mechanism shown in FIGS. 18A and 18B, for example. In this friction drive mechanism, a rail 1404 is sandwiched between a friction gear 1403 and a roller 1405 facing the friction gear 1403 integrally by using springs (not shown) to thereby apply a preload. Then, if only the friction gear 1403 is rotated by a motor 1401, the friction gear 1403 moves due to frictional force between the friction gear 1403 and the rail 1404. As a result, a table mounted with the friction gear 1403, the roller 1405, and the motor 1401 moves. (For example, Japanese Unexamined Patent Publication No.11-247955, Japanese Unexamined Utility Model Publication No. 3-28350, and Japanese Patent Publication No. 2886610)

However, in the above ball screw mechanism, the ball screw 1300 is expensive. Moreover, in moving the table over a long stroke and at high speed, fluctuation due to rotation, slack, or the like of the ball screw 1300, i.e., a so-called jumping rope phenomenon occurs to thereby obstruct movement of the table B.

On the other hand, in order to stably move the friction drive mechanism, it is necessary to stably apply pressing forces between the friction gear 1403 and the rail 1404 and between the roller 1405 and the rail 1404. However, in the above friction drive mechanism, the friction gear 1403 is driven for rotation by the motor 1401 while the roller 1405 facing the friction gear 1403 merely rolls. In other words, the friction gear 1403 applies a rotary driving force in addition to the pressing force to the rail 1404 while the roller 1405 applies only the pressing force to the rail 1404. Therefore, this friction drive mechanism has a demerit of producing low driving force, weighing a number of rollers. As a result, a driving force from one direction is applied to rail 1404 when a rapid load is imposed and transport speed is changed, whereby the table mounted with these members is difficult to move smoothly and stably.

### SUMMARY OF THE INVENTION

With the above circumstances in view, it is an object of the present invention to provide a friction drive unit for stably moving a table by using a friction drive mechanism without using a ball screw.

According to one aspect of the invention, there is provided a friction drive unit for moving a table along a rail comprising:
a pair of drive rollers for sandwiching a guide rail therebetween, one of the pair of the drive rollers being connected to a drive source;
a pair of reverse rollers attached to roller shafts of the respective drive rollers so as to transmit rotation of the one drive roller connected to the drive source to the other drive roller; and
two arm portions formed integrally with or separately from one another, the pair of the drive rollers being pivoted on the arm portions, respectively,
wherein the two arm portions are resiliently deformable in such directions as to approach and move away from each other and are provided so that the pair of the drive rollers produce pressing forces to the guide rail.

According to another aspect of the invention, there is provided a friction drive unit for moving a table along a rail comprising:
a pair of drive rollers for sandwiching a guide rail therebetween, one of the pair of the drive rollers being connected to a drive source;
a pair of reverse rollers attached to roller shafts of the respective drive rollers so as to transmit rotation of the one drive roller connected to the drive source to the other drive roller;
two arm portions being swingable, the pair of the drive rollers being pivoted on the arm portions, respectively; and
a tightening portion for tightening the two arm portions together so that the pair of the drive rollers produce pressing forces to the guide rail by adjusting a space between both of the arm portions.

According to yet another aspect of the invention, there is provided a friction drive unit for moving a table along a rail comprising:
a single drive roller connected to a drive source, the drive roller producing a pressing force to an upper face of the rail fixed onto a base member; and
a housing attached to the table through a attaching portion protruding sideways,
wherein the housing supports the drive source and pivots the drive roller and
the attaching portion of the housing is provided so that the drive roller produces the pressing force to the rail by resilient deformation of the housing in the vertical direction.

Other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

FIGS. 1A and 1B are schematic views showing an attached state of a friction drive unit according to an embodiment 1 of the invention, wherein FIG. 1A is a top plan view and FIG. 1B is a side plan view.

FIG. 2 is a top plan view of a structure of the friction drive unit according to the embodiment 1 of the invention.

FIG. 3 is a cross-sectional view of an inner structure of the friction drive unit according to the embodiment 1.

FIG. 4 is a top plan view of a structure of a friction drive unit according to an embodiment 2 of the invention.

FIG. 5 is a top plan view of a structure of a friction drive unit according to an embodiment 3 of the invention.

FIGS. 6A to 6B are schematic views showing a structure of a friction drive unit according to an embodiment 4 of the invention, wherein FIG. 6A shows a friction drive unit of a biaxial link type and FIG. 6B shows a friction drive unit of a uniaxial link type

FIGS. 7A to 7C are schematic views showing a structure of a friction drive unit according to an embodiment 5 of the invention, wherein FIG. 7A is a side plan view, FIG. 7B is a top plan view, and FIG. 7C is a partial cross-sectional side view.

FIGS. 8A to 8C are schematic views showing a structure of a friction drive unit according to an embodiment 6 of the invention, wherein FIG. 8A is a side plan view, FIG. 8B is a top plan view, and FIG. 8C is a partial cross-sectional side view.

FIGS. 9A and 9B are schematic views showing forms of drive rollers according to the embodiment 6 of the invention, wherein FIG. 9A is a side plan view of straight drive rollers and FIG. 9B is a side plan view of the drive rollers formed with arc-shaped recessed portions.

FIG. 10 is a cross-sectional side view showing other example of a structure of a friction drive unit according to the embodiment 6 of the invention.

FIGS. 11A and 11B are schematic views showing a structure of a friction drive unit according to an embodiment 7 of the invention, wherein FIG. 11A is a top plan view and FIG. 11B is a side plan view.

FIGS. 12A and 12B are schematic views showing a structure of a friction drive unit according to an embodiment 8 of the invention, wherein FIG. 12A is a top plan view and FIG. 12B is a side plan view.

FIGS. 13A and 13B are schematic views showing structures of friction drive units according to an embodiment 9 of the invention, wherein FIG. 13A is a side plan view of a friction drive unit having a tightening portion and FIG. 13B is a side plan view of a friction drive unit without a tightening portion.

FIG. 14 is a top plan view showing an example of coupled friction drive units in two lines according to the embodiment 9 of the invention.

FIG. 15 is a side plan view of other example of a friction drive unit attached to a table bottom face according to the embodiment 9 of the invention.

FIG. 16 is a partial cross-sectional view showing an example of a form of connection between a drive source and an arm portion according to an embodiment 10 of the invention.

FIG. 17 is a cross-sectional view showing a prior-art direct-acting drive mechanism (ball screw mechanism).

FIGS. 18A and 18B are schematic views showing a prior-art direct-acting drive mechanism (friction drive mechanism), wherein FIG. 18A is a front plan view and FIG. 18B is a side plan view.

### DETAILED DESCRIPTION OF THE PREFERRED EMBODIMENTS

### (Embodiment 1)

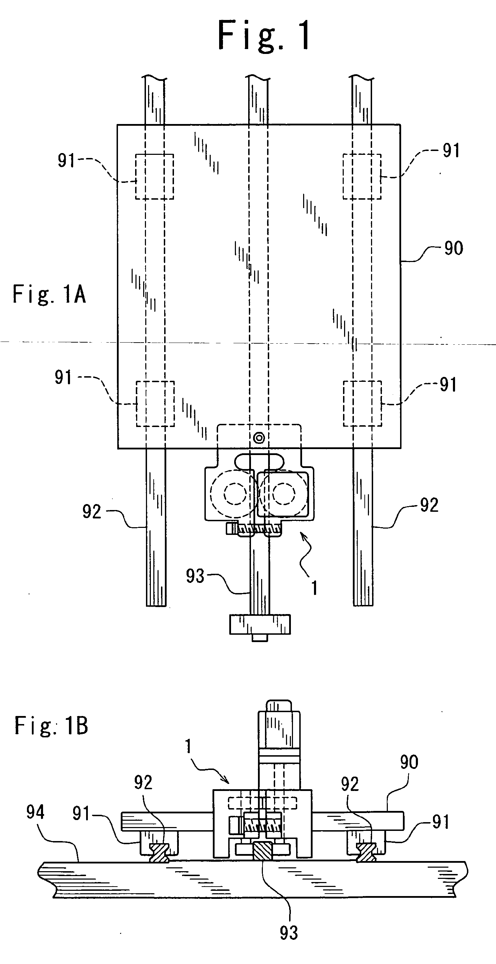

As shown in FIGS. 1A and 1B, in the present embodiment, three rails are disposed on a base member 94 and one of the rails is used as a guide rail 93. The friction drive unit 1 is a device for moving a table 90 along the two rails 92. The table 90 is in a rectangular shape and is mounted onto the straight rails 92 disposed in two parallel lines on the base member 94 through sliding guides 91 having rolling elements. On the other hand, the friction drive unit 1 is attached to an end portion of the table 90 and is disposed on a guide rail 93 parallel to the rails 92. The guide rail 93 is in a shape of a square pole and is mounted onto the base member 94 to be parallel to the two rails 92 between the two rails 92.

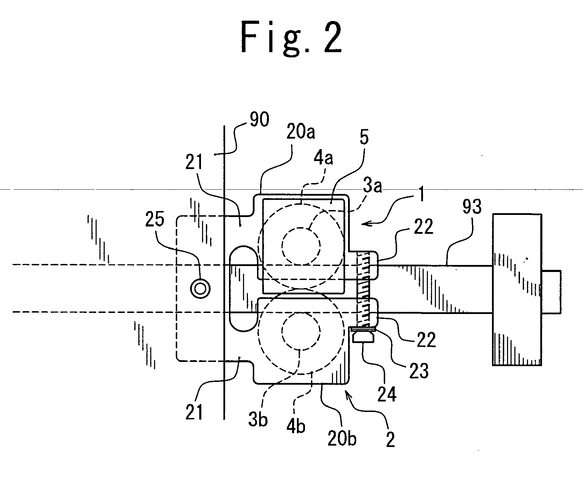

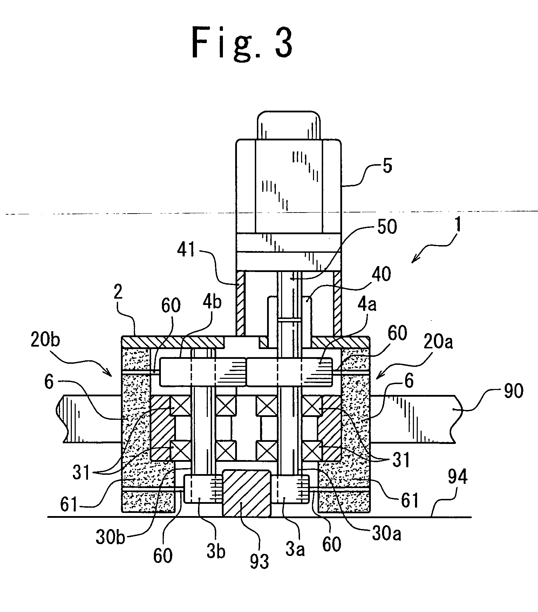

As shown in FIGS. 2 and 3, the friction drive unit 1 includes:
a U-shaped arm 2 fixed to the table 90 by a fixing bolt 25 and forming a housing having two arm portions 20a, 20b;
a pair of drive rollers 3a, 3b pivoted on the two arm portions 20a, 20b of the U-shaped arm 2 to sandwich a guide rail 93 with predetermined pressing forces from left and right;
a drive source 5 such as a servomotor attached to one arm portion 20a and connected to a roller shaft 30a of the drive roller 3a; and
a pair of reverse rollers 4a, 4b attached to the roller shafts 30a, 30b of the respective drive rollers 3a, 3b to transmit rotation of the drive source 5 to the other drive roller 3b.

The U-shaped arm 2 is made of various materials such as aluminum. The respective arm portions 20a, 20b of the U-shaped arm 2 are resiliently deformable in such directions as to approach and move away from each other. Base end portions 21 of the respective arm portions 20a, 20b are formed to have predetermined shapes and predetermined wall thicknesses so as to make the arm portions 20a, 20b liable to be deformed resiliently. For example, in the embodiment, the base end portions 21 are formed to be thinner-walled. The two arm portions 20a, 20b are provided so that an inside width between the pair of the drive rollers 3a, 3b becomes smaller than a width in a left-right direction of the guide rail 93 to sandwich the guide rail 93 between the pair of the drive rollers 3a, 3b. With this space between the drive rollers 3a, 3b, the pair of the drive rollers 3a, 3b produce predetermined pressing forces on the guide rail 93.

Both of the arm portions 20a, 20b are tightened at their tip end portions 22 with a tightening bolt 24 (tightening portion). Between a head portion of the tightening bolt 24 and the tip end portion 22 of the arm portion 20b, cushioning material such as a belleville spring 23 and urethane rubber is inserted to thereby adjust a tightening force of the tightening bolt 24. In other words, by using the tightening bolt 24 and the belleville spring 23, it is possible to resiliently adjust the space between the arm portions 20a, 20b. With the above structure, the pressing forces of the pair of drive rollers 3a, 3b to the guide rail 93 are adjusted. Further, with resilient deformation of the respective arm portions 20a, 20b and the cushioning material such as the belleville spring 23 interposed between the head portion of the tightening bolt 24 and the tip end portion 22, it is possible to prevent excessive loads of the pressing forces between the guide rail 93 and the pair of drive rollers 3a, 3b due to a assembling error or the like of the guide rail 93. Furthermore, since the pressing forces of the drive rollers 3a, 3b are equalized, it is possible to move the table with high precision and high stability. Moreover, since the stable pressing forces are maintained even when the rails, the rollers and the like vary across the ages, it is possible to provide a maintenance-free driving unit. Although the tightening bolt 24 that is the tightening portion is disposed at the tip end portions 22 of the arm portions 20a, 20b, it may be disposed in different positions. Meanwhile, if the space between both tip end portions 22 of the arm portions 2a, 2b is smaller than the width of the guide rail, it is possible to attach the driving unit 1 to the guide rail 93 easily by widening the space of the tightening portion.

As shown in FIG. 3, in the friction drive unit 1, the drive rollers 3a, 3b are pivoted on the two arm portions 20a, 20b of the U-shaped arm 2. The pair of the drive rollers 3a, 3b are disposed so as to sandwich the guide rail 93 from left and right with the predetermined pressing forces. The reverse rollers 4a, 4b are provided to the other ends of roller shafts 30a, 30b of the respective drive rollers 3a, 3b and the pair of reverse rollers 4a, 4b are disposed so as to be in contact to transmit a rotary driving force. Therefore, if one of the drive rollers 3a is rotated by the drive source 5 connected to the one arm portions 20a, the other drive roller 3b is rotated in a reverse direction through the pair of the reverse rollers 4a, 4b. With the above structure, the friction drive unit 1 moves along the guide rail 93 and, as a result, the table 90 attached with the friction drive unit 1 moves freely along the rails 92.

The roller shafts 30a, 30b of the drive rollers 3a, 3b are rotatably pivoted on the arm portions 20a, 20b through bearing members 31 such as ball bearings. The drive rollers 3a, 3b and the reverse rollers 4a, 4b may be made of hardened and ground metal and also materials such as engineering plastic and urethane. The drive rollers 3a, 3b may be produced integrally with the roller shafts 30a, 30b, respectively, by hardening and grinding of bearing steel or the drive rollers 3a, 3b and roller shafts 30a, 30b produced separately may be attached to each other, respectively. Moreover, it is also possible that the roller shafts 30a, 30b are in direct contact with the guide rail 93 and used as the respective drive rollers 3a, 3b. The pair of the reverse rollers 4a, 4b are in contact with each other so as not to hinder sandwiching of the guide rail 93 between the pair of the drive rollers 3a, 3b by resiliency of the arm portions 20a, 20b.

Walls forming the respective arm portions 20a, 20b may be provided with oil retaining layers 6 formed by impregnating felt or the like with lubricant such as traction oil. In the embodiment, thin felts 60 are inserted into parts of the oil retaining layers 6. As tip ends of the felts 60 come in contact with the drive rollers 3a, 3b and the reverse rollers 4a, 4b, respectively, the lubricant is supplied at an extremely low rate to the drive rollers 3a, 3b and reverse rollers 4a, 4b by capillary action upon rotation of the rollers. By doing so, the driving force is transmitted by friction transmission in a semi-dried state due to the lubricant in each portion of the drive rollers 3a, 3b, the reverse rollers 4a, 4b, and the guide rail 93. By supplying the lubricant to those members, wearing of the members such as the drive rollers 3a, 3b, the guide rail 93 and the reverse rollers 4a, 4b is lessened. If the traction oil is used as the lubricant, it is possible not only to lessen the wearing but also to suppress reduction in the friction transmitting force. In other words, shear force acting on the traction oil that has introduced into portions where the guide rail 93 and the drive rollers 3a, 3b are in contact with each other or the reverse rollers 4a, 4b are in contact with each other increases a traction coefficient. As a result, power transmitting efficiency between the guide rail 93 and the drive rollers 3a, 3b or between the reverse rollers 4a, 4b increases to thereby suppress reduction in the friction transmitting force.

According to the above friction drive unit 1, the respective arm portions 20a, 20b provided with the drive rollers 3a, 3b are provided in such manners that they are liable to be deformed resiliently to approach and move away from each other in the U-shaped arm 2. Therefore, if the friction drive unit 1 is attached to the guide rail 93, the pair of the drive rollers 3a, 3b receive resiliency of the respective arm portions 20a, 20b and press the guide rail 93 from opposite sides with substantially the same pressing forces. When the friction drive unit 1 is being driven, the pair of the drive rollers 3a, 3b sandwich the guide rail 93 between them with substantially the same pressing forces. Moreover, the respective arm portions 20a, 20b have such structures that they are liable to be deformed resiliently and therefore, even if the drive rollers 3a, 3b and the guide rail 93 wear, the respective arm portions 20a, 20b approach each other by a distance corresponding to the wear. Therefore, it is possible to apply stable pressing forces between the drive rollers 3a, 3b and guide rail 93.

Furthermore, with the tightening bolt 24 and the belleville spring 23 for tightening the tip end portions 22 of both the arm portions 20a, 20b together, the pressing forces to be applied by the drive rollers 3a, 3b to the guide rail 93 are adjusted. By doing so, the pair of the drive rollers 3a, 3b can stably apply substantially the same pressing forces to the guide rail 93 from opposite sides. Moreover, through the pair of the reverse rollers 4a, 4b, substantially the same rotary driving forces are transmitted by the pair of the drive rollers 3a, 3b from opposite sides of the guide rail 93.

Therefore, the pair of the drive rollers 3a, 3b stably transmit their rotary driving forces to the guide rail 93 to thereby stably move the friction drive unit 1. As a result, it is possible to smoothly and stably move the table 90 assembled with the friction drive unit 1.

Moreover, because the pair of the reverse rollers 4a, 4b are disposed in contact with each other, it is possible to prevent tilt of the roller shafts 30a, 30b attached with the reverse rollers 4a, 4b. As a result, it is possible to prevent tilt of the roller shafts 30a, 30b into an inverted V shape and contact of only one of the drive rollers 3a, 3b with the guide rail 93.

Furthermore, since the friction drive unit 1 is formed so that reaction forces of the pressing forces of the pair of the drive rollers 3a, 3b on the guide rail 93 are received by the arm portions 20a, 20b of the U-shaped arm 2, all of the driving forces for direct-acting guiding and the pressing forces cancel each other out in the friction driveunit 1. Therefore, it is possible to provide a drive device for direct-acting guiding without changing the existing equipment such as the rails 92, the table 90, and the sliding guides 91.

In the embodiment, a linear scale may be disposed parallel to the guide rail 93 (or the rails 92 in two lines), and a sensor and a control portion may be further provided. A sensor arranged to the table 90 (or the sliding guide 91) may read the linear scale and a control portion may control movement of the table by feeding the positional information back to a motor of the drive source 5. By doing so, a positional error due to slip generated by a traction drive between the guide rail 93 and the drive rollers 3a, 3b is corrected to thereby achieve positional control with high precision.

### (Embodiment 2)

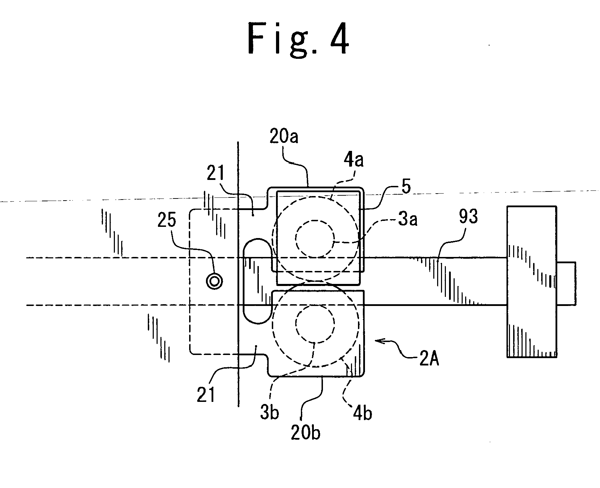

As shown in FIG. 4, in the present embodiment, opposite arm portions 20a, 20b of a U-shaped arm 2A forming a housing are not tightened at their opposite tip end portions 22 by a tightening bolt 24 but formed with free ends instead. Only with resiliency of the respective arm portions 20a, 20b, a pair of drive rollers 3a, 3b press a guide rail 93 while sandwiching the guide rail 93 between them from left and right with substantially the same pressing forces. For this purpose, in the two arm portions 20a, 20b, an inside width between the pair of the drive rollers 3a, 3b is set of a dimension smaller than a width of the guide rail 93 to be sandwiched between the pair of the drive rollers 3a, 3b. In the friction drive unit 1, the pressing forces are set of such values that the drive rollers 3a, 3b do not slip even at instantaneous maximum torque of a motor of a drive source 5.

Therefore, in the above friction drive unit, a structure for providing the tightening bolt 24 and members such as the tightening bolt 24 and a belleville spring 23 are not required and it is possible to simplify the structure. Other structures, operation, and effects are the same as those of the above embodiment 1.

### (Embodiment 3)

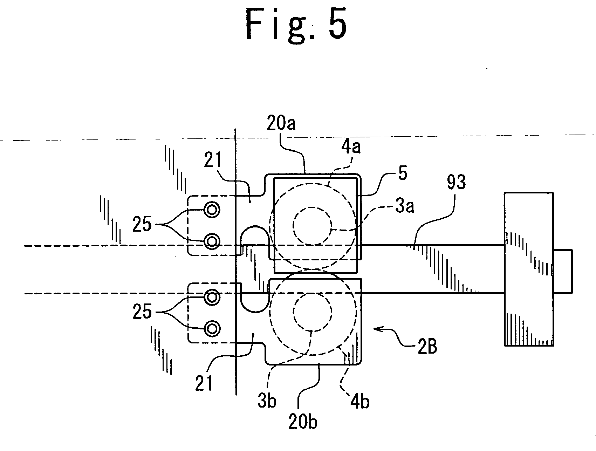

As shown in FIG. 5, in the present embodiment, a housing 2B includes two separate arm portions 20a, 20b on which drive rollers 3a, 3b are pivoted. These arm portions 20a, 20b are respectively fixed to a table 90 by two fixing bolts 25. Base end portions 21 of the arm portions 20a, 20b are formed to have in predetermined shapes and predetermined wall thicknesses and the respective arm portions 20a, 20b have such structures as to be liable to be deformed resiliently in such directions as to approach and move away from each other. Both of the arm portions 20a, 20b have free tip end portions 22.

Therefore, in the embodiment, the two arm portions 20a, 20b on which the drive rollers 3a, 3b are pivoted are formed independently of each other and these separate arm portions 20a, 20b are fixed to the table 90. As a result, the pair of the drive rollers 3a, 3b can adapt to and sandwich the guide rails 93 having various widths therebetween with the predetermined pressing forces. Other structures, operation, and effects are the same as those of the above embodiment 1.

### (Embodiment 4)

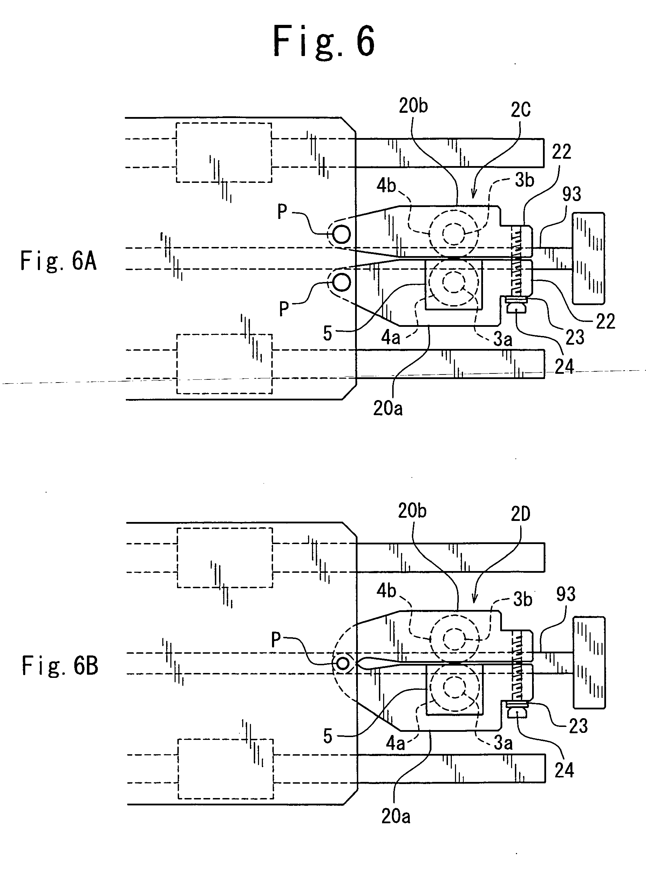

As shown in FIG. 6A, in the present embodiment, a housing 2C includes two arm portions 20a, 20b formed independently of each other and drive rollers 3a, 3b are respectively pivoted on the arm portions 20a, 20b. The arm portions 20a, 20b are fixed to a table 90 by pins P. The respective arm portions 20a, 20b form a biaxial link so that they are swingable to approach and move away from each other about the pins P as fulcrums. By tightening tip end portions 22 of the arm portions 20a, 20b together by a tightening bolt 24 (tightening portion) through a belleville spring 23 (cushioning material), a space between the respective arm portions 20a, 20b is adjusted.

Therefore, in the embodiment, pressing forces of the pair of the drive rollers 3a, 3b on the guide rail 93 can be adjusted freely by adjusting a tightening force of the tightening bolt 24 provided to the tip end portions 22 and a biasing force of the belleville spring 23. Moreover, as shown in FIG. 6B, respective arm portions 20a, 20b of a housing 2D may be fixed to the table 90 to form a uniaxial link by using one pin P. Other structures, operation, and effects are the same as those of the above embodiment 1. Therefore, also, in the embodiment, the arm portions may include retaining layers similarly to the embodiment 1.

### (Embodiment 5)

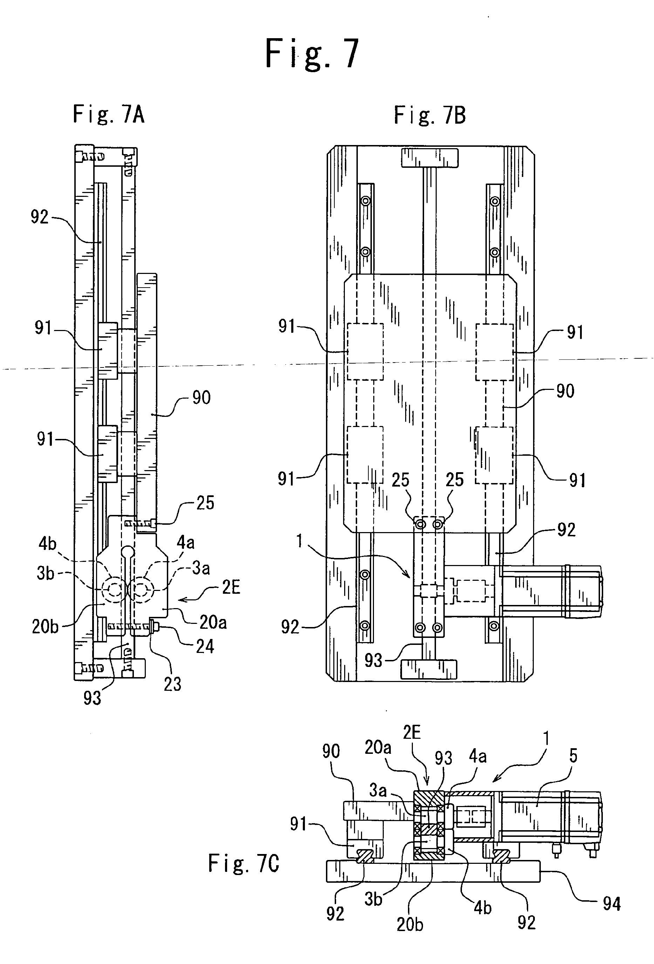

As shown in FIGS. 7A to 7C, in the present embodiment, a guide rail 93 is disposed while isolated upward from a base member 94. With the friction drive unit of the embodiment, two arm portions 20a, 20b of a U-shaped arm 2E forming a housing are disposed in a perpendicular orientation to the base member 94. The pair of the drive rollers 3a, 3b sandwich the guide rail 93 between them from above and below. By doing so, it is possible to dispose a drive source 5 aside.

Therefore, in the embodiment, the drive source 5 that may become an obstruction above the table 90 can be displaced to the side of the table 90. Thus, it is possible to effectively use a space above the table 90 where the drive source 5 does not protrude. Other structures, operation, and effects are the same as those of the above embodiment 1.

### (Embodiment 6)

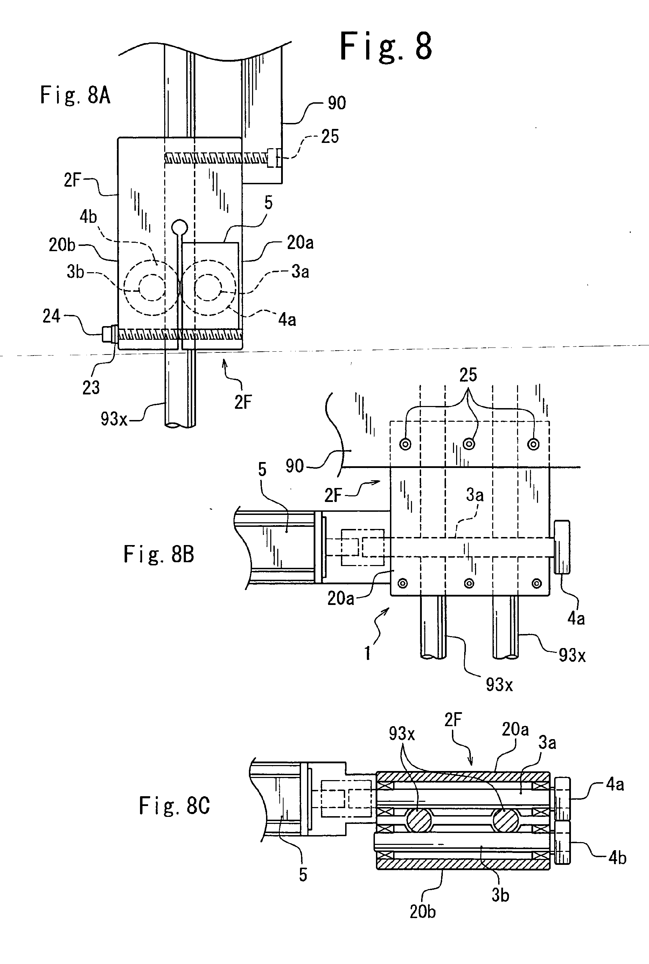

As shown in FIGS. 8A to 8C, in the present embodiment, two round shaft guide rails 93X are used as the guide rail 93 and the two round shaft guide rails 93X are disposed parallel and side by side while isolated upward from the base member 94. Further, circular cylindrical a pair of drive rollers 3a, 3b are used. Two arm portions 20a, 20b of a U-shaped arm 2F forming a housing are disposed in a perpendicular orientation to the base member. The pair of the drive rollers 3a, 3b are disposed to sandwich the two round shaft guide rails 93X between them from above and below.

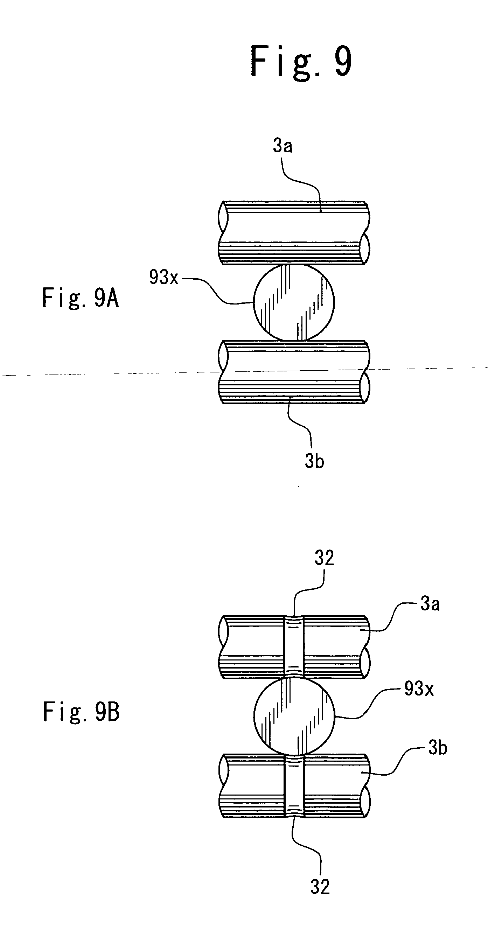

Outer peripheral faces of the drive rollers 3a, 3b may be formed straight throughout their lengths as shown in FIG. 9A or contact portions 32 of the drive rollers 3a, 3b with the round shaft guide rails 93X may be formed in recessed arc shapes corresponding to arcs of the round shaft guide rails 93X as shown in FIG. 9B. A drive source 5 is disposed aside similarly to the embodiment shown in FIG. 7.

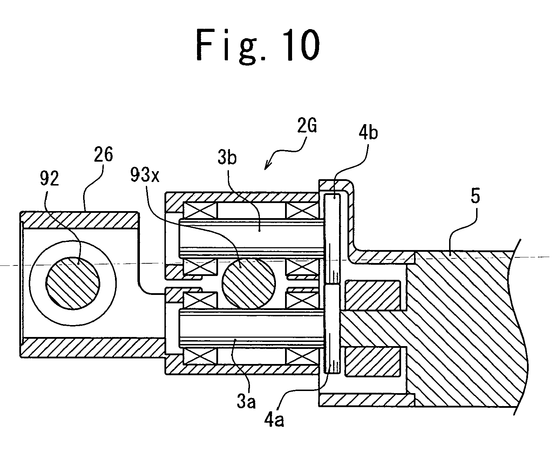

In the present embodiment, because the round shaft guide rails 93X are used, states of contact between the round shaft guide rails 93X and the pair of the drive rollers 3a, 3b do not change even when circumferential twists occur on the round shaft guide rails 93X. Therefore, the pair of the drive rollers 3a, 3b can stably apply pressing forces to the two round shaft guide rails 93X and, as a result, the friction drive unit 1 moves stably. Moreover, by using the round shaft guide rails 93X, it is possible to reduce a cost of manufacturing the guide rail with high precision. In the present embodiment, one single round shaft guide rail 93X may be sandwiched with drive rollers 3a, 3b, as shown in FIG. 10. In the driving unit, the housing 2G has a rail retaining portion 26 to be supported the rail 92 parallel to the round shaft guide rail 93X. Therefore, the driving unit moves stably. Other structures, operation, and effects are the same as those of the above embodiment 1.

### (Embodiment 7)

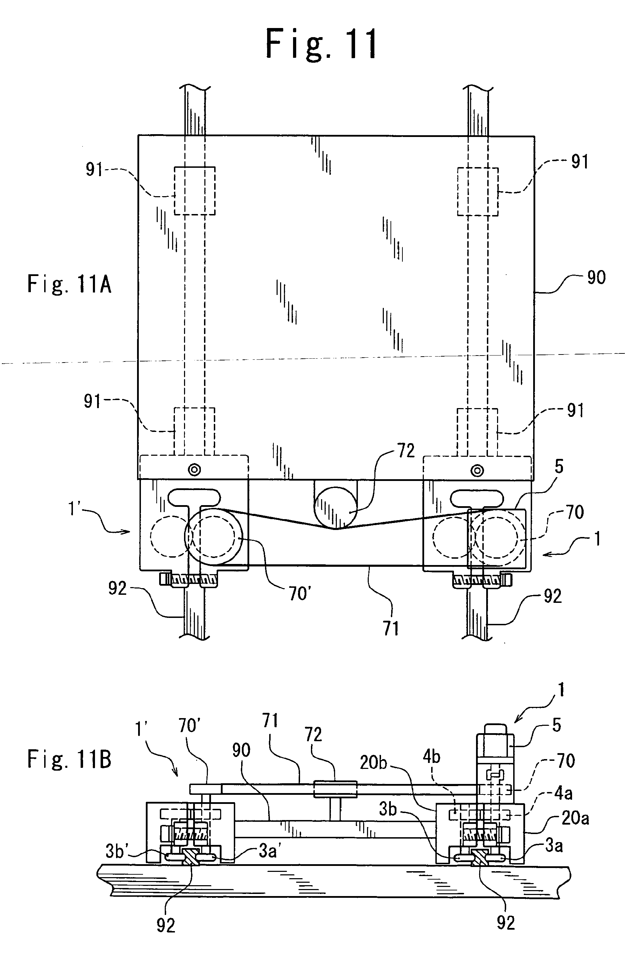

As shown in FIGS. 11A and 11B, in the present embodiment, friction drive units 1, 1' are respectively attached to rails 92 in two lines. Sliding guides 92 are respectively attached to the rail 92. The friction drive unit 1 (first friction drive unit) attached to one of the rails 92 has a drive source 5 while the friction drive unit 1' (second friction drive unit) attached to the other rail 92 does not have a drive source 5. In the respective friction drive units 1, 1', pulleys 70, 70' having the same diameters are attached to roller shafts of drive rollers 3a, 3a'. By using the pulleys 70, 70' around which a timing belt 71 is wound, the one friction drive unit 1 transmits a rotary driving force to the other friction drive unit 1'. As a result, the pair of the drive rollers 3a, 3b and the pair of the drive rollers 3a', 3b' of the respective left and right friction drive units 1, 1' are driven for rotation in synchronization with each other and therefore movements of the table 90 on the left and right rails 92 are balanced. A pressing roller 72 is attached to a center of an end portion of the table 90 to prevent generation of a slack in the timing belt 71.

Therefore, in the embodiment, because the friction drive unit 1 is attached to the rail 92 assembled with the sliding guide 91, the rail 92 functions as the guide rail 93. By doing so, it is possible to simplify the structure and to reduce the cost.

Although the friction drive units 1, 1' are attached to the rails 92 in two lines, respectively, in FIGS. 11A and 11B, the friction drive unit 1 may be attached to only one of the rails 92. Modifications including the structures shown in FIGS. 4 to 6C may be made in the friction drive unit 1 attached to the rail 92. Other structures, operation, and effects are the same as those of the above embodiment 1.

### (Embodiment 8)

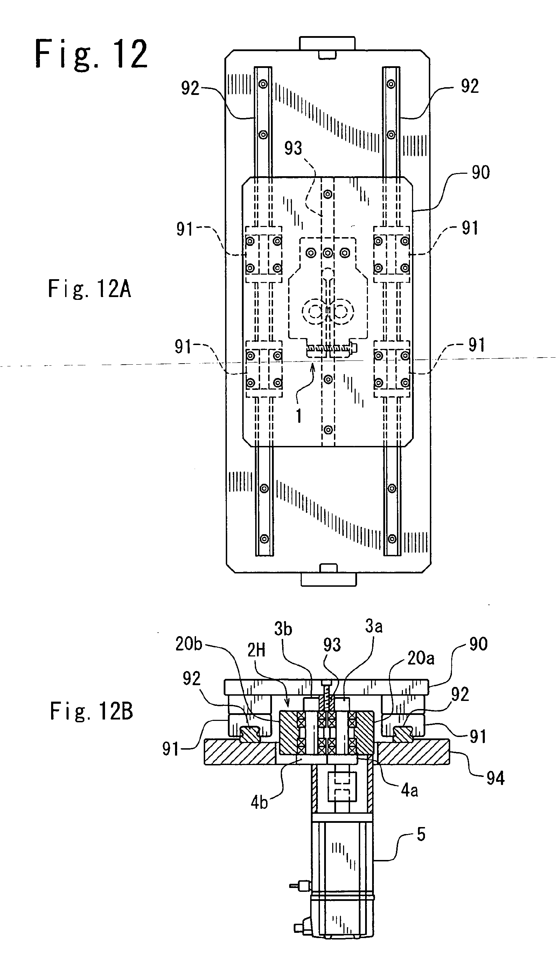

As shown in FIGS. 12A and 12B, in the present embodiment, a guide rail 93 is attached to a bottom face of a table 90. Because a U-shaped arm 2H forming a housing of a friction drive unit 1 is fixed to a base member 94, the friction drive unit 1 does not move.

Therefore, if a drive source 5 of the friction drive unit 1 rotates drive rollers 3a, 3b, the guide rail 93 sandwiched between the pair of the drive rollers 3a, 3b is sent out by these drive rollers 3a, 3b. As a result, the table 90 moves along rails 92 in two lines.

If the friction drive unit 1 is attached to the table 90 as in the embodiments 1 to 7, the friction drive unit 1 and the table 90 travel together. In those cases, however, wiring for supplying power to the drive source 5 of the friction drive unit 1 also moves together and therefore it is necessary to move the wiring by using a caterpillar or the like. Therefore, long wiring for the movement and a structure for moving the wiring are required and the long wiring becomes an obstruction to operation.

On the other hand, according to the embodiment, the friction drive unit 1 is fixed to the base member 94 and does not move. Therefore, it is possible to fix the wiring for supplying power to the drive source 5 of the friction drive unit 1 in a predetermined position. As a result, the structure for moving the wiring is not required and it is possible to avoid long and obstructive wiring. Other structures, operation, and effects are the same as those of the above embodiment 1.

### (Embodiment 9)

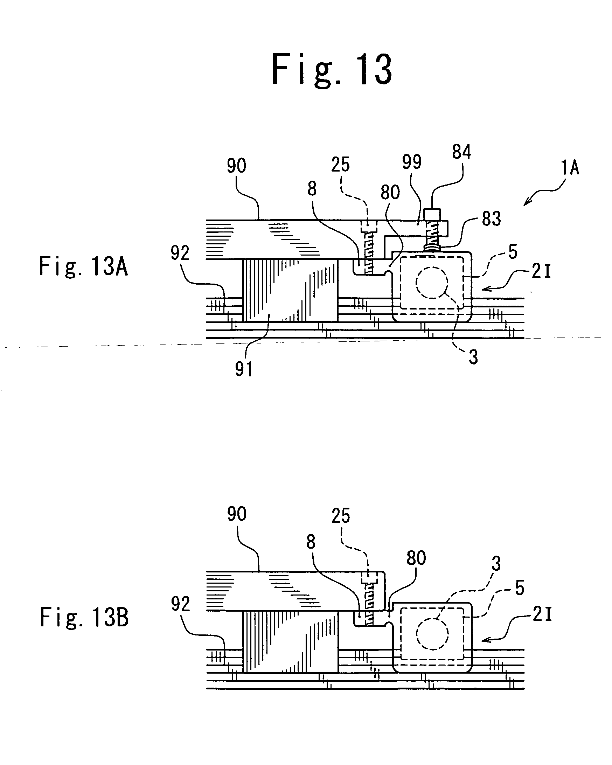

As shown in FIG. 13A, in the present embodiment, one single drive roller 3 is pivoted on a housing 2I. A drive source 5 attached to a side wall of the housing 2I is connected to the drive roller 3 to thereby drive the drive roller 3 for rotation. Further, the housing 2I is attached to an end portion of a table 90 so that a rail 92 to which a sliding guide 91 is attached and the drive roller 3 come in contact with each other in movement. By driving the drive roller 3 while bringing the drive roller 3 in pressure contact with an upper face of the rail 92, the friction drive unit 1A travels on the rail 92 and the table 90 moves.

In the friction drive unit 1A, an attaching portion 8 protruding sideways from an upper end of the housing 2I is fixed to the table 90 by a fixing bolt 25. A base end portion 80 of the attaching portion 8 has a predetermined shape and a wall thickness so that the housing 2I on which the drive roller 3 is pivoted can be deformed resiliently. On the other hand, the table 90 includes a protruding piece 99 protruding sideways from an upper end of an end portion on the housing 2I side and facing with an upper face of the housing 2I. A tightening bolt 84 as a tightening portion is attached to the protruding piece 99 and the tightening bolt 84 presses the housing 2I downward through a cushioning material such as a belleville spring 83. By doing so, the drive roller 3 pivoted on the housing 2I applies a predetermined pressing force to the rail 92. By means of a degree of tightening of the tightening bolt 84, the pressing force of the drive roller 3 on the rail 92 is adjusted.

Therefore, in the embodiment, since the sliding guide 91 receives a reaction force of the pressing force from the friction drive unit 1A, the drive roller 3 can apply the stable pressing force to the rail 92. As a result, the drive roller 3 stably transmits its rotary driving force to the rails 92 without slipping. Thus, it is possible to stably move the friction drive unit 1A and, as a result, it is possible to smoothly and stably move the table 90 connected to the friction drive unit 1A.

Incidentally, as shown in FIG. 13B, the tightening portion for adjusting the pressing force by means of the tightening bolt 84 through the belleville spring 83 may be eliminated from the friction drive unit 1A. The drive roller 3 may press the rail 92 only by resilient deformation of the attaching portion 8 of the housing 2I.

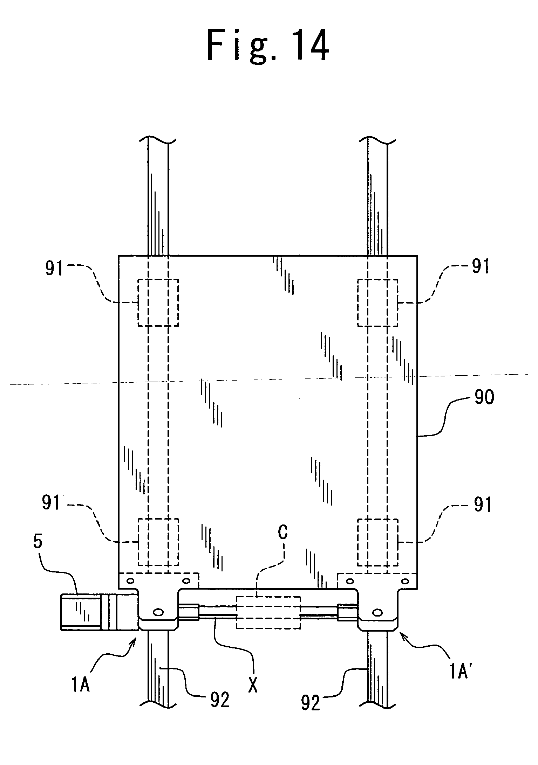

Moreover, as shown in FIG. 14, the friction drive units 1A (first friction drive unit), 1A' (second friction drive unit) may be attached to the respective rails 92 in two lines. In this case, a drive source 5 is provided to one of the friction drive unit 1A but is not provided to the other friction drive unit 1A'. Roller shafts of drive rollers of the left and right friction drive units 1A, 1A' are coupled by a coupling shaft X and a coupling C to thereby transmit a rotary driving force. Thus, the left and right friction drive units 1A, 1A' travel in synchronization with each other.

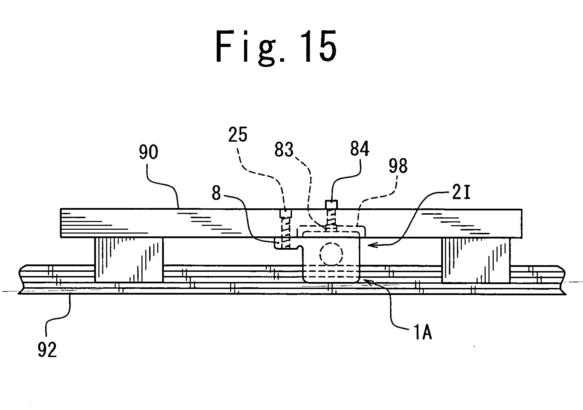

As shown in FIG. 15, the friction drive unit 1A may be disposed in the table 90. In this case, a recessed portion 98 is formed in a bottom face of the table 90 to dispose the friction drive unit 1A. The recessed portion 98 allows upward and downward movements of the housing 2I through resilient deformation of the attaching portion 8.

Moreover, in the embodiment, the housing 2I may be provided with an oil retaining layer to supply lubricant to the drive roller 3. By supplying the lubricant, wearing of the members such as the drive rollers 3 and the rail 92 is lessened. Furthermore, if the traction oil is used as the lubricant, it is possible not only to lessen the wearing but also to suppress reduction in the friction transmitting force.

### (Embodiment 10)

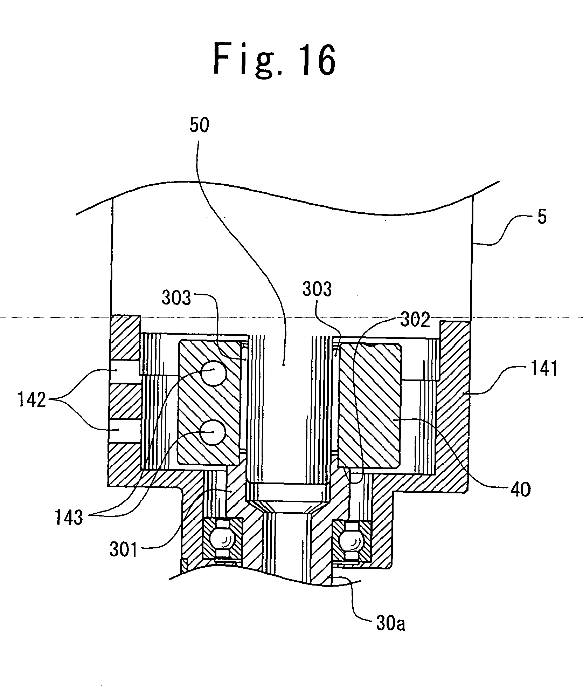

Although the arm portion and the drive source are connected through a connecting frame 41 in the above embodiments as shown in FIG. 3, for example, a form of connection is not limited to this. FIG. 16 is a partial cross-sectional view showing another example of the form of connection between the arm portion (not shown) on the drive source side and the drive source 5. As shown in FIG. 16, a flange portion 141 connected to the arm portion may be formed between the arm portion and the drive source 5. By forming the flange portion 141, the roller shaft 30a on the drive source side and the drive shaft 50 are connected with the set collar 40 in the flange portion 141 and therefore assembly becomes easy and also a dust-proof effect can be obtained. Further, tool through holes 142 for connecting the roller shaft 30a and the drive shaft 50 by tightening the set collar 40 are formed in a side face of the flange portion 141.

To connect the arm portion and the drive source 5, the set collar 40 having threaded holes 143 and a slit (not shown) at a portion of its cylinder is first fitted onto the roller shaft 30a. The roller shaft 30a has a large-diameter portion 301 at its outer peripheral end portion, and thus the set collar 40 is locked by an annular step portion 302 of the large-diameter portion 301. Next, the drive shaft 50 is inserted into the set collar 40 from the other end side of the set collar 40. Thus, a tip end portion of the drive shaft 50 is housed in the roller shaft 30a when the drive shaft 50 is inserted into the roller shaft 30a. Moreover, as shown in FIG. 16, the roller shaft 30a has a slit 303 at a tip end portion of the roller shaft 30a. By forming the slit 303, the drive shaft 50 becomes easy to insert into the roller shaft 30a and the roller shaft 30a is reliably connected to the drive shaft 50 by tightening of the set collar 40. A sufficient number of slit 303 is one or more, normally one or two. A length of the slit 303 is shorter than a length of the set collar 40 in the shaft direction and set so that a lower end portion of the slit 303 is closer to the drive source 5 than a position of the tip end portion of the drive shaft 50 inserted into the roller shaft 30a. By screwing screws in a tightening direction into the tool through holes 142 from the side face of the flange portion 141 by using a tightening tool in a state in which the drive shaft 50 has been inserted into the roller shaft 30a as described above, the set collar 40 is tightened and the drive shaft 50 and the roller shaft 30a are connected.

The above form of connection can be applied to any of the embodiments. For example, in the friction drive unit of the embodiment 9 shown in FIG. 13, a similar flange portion may be formed at the housing 2I to connect the housing 2I and the drive source 5. In this case, it is also possible to employ a structure similar to the above to connect the drive shaft and the roller shaft.

### (Other embodiments)

(a) In each of the above embodiments, a position of the housing 2 of the friction drive unit 1 may be set properly, e.g., the housing 2 may be arranged inside the table 90.
(b) The friction drive unit 1 may be provided in place of a part or all of the sliding guides 91 attached to the rails 92. In this case, the rail 92 attached with the friction drive unit functions as the guide rail 93.
(c) The guide rail 93 may be a round shaft guide rail having flat face portions at portions to be in contact with the drive roller 3. Because the guide rail above can be manufactured by flattening parts of a hardened shaft, it is possible to reduce the cost of manufacturing.
(d) A part of the friction drive unit 1 may be formed of a transparent material. In this case, because condition of the oil retaining layer 6 can be observed, it is possible to check an amount of the oil out from the outside.

As described above in detail, the friction drive units of the invention can be classified into the following types (i) to (iii).
In other words,

(i) According to one aspect of the invention, there is provided A friction drive unit for moving a table along a rail comprising:
a pair of drive rollers for sandwiching a guide rail therebetween, one of the pair of the drive rollers being connected to a drive source;
a pair of reverse rollers attached to roller shafts of the respective drive rollers so as to transmit rotation of the one drive roller connected to the drive source to the other drive roller; and
two arm portions formed integrally with or separately from one another, the pair of the drive rollers being pivoted on the arm portions, respectively,
wherein the two arm portions are resiliently deformable in such directions as to approach and move away from each other and are provided so that the pair of the drive rollers produce pressing forces to the guide rail.

The guide rail may be the same rail as or different from the rail for moving the table.

According to the above structure, the two arm portions are resiliently deformable in such directions as to approach and move away from each other. Therefore, even if the guide rail cannot be maintained completely parallel to the drive rollers due to a processing error or an assembling error, the resilient deformation of the arm portions can accommodate the errors. Thus, smooth movement of the table becomes possible.

Also, the pair of the drive rollers can stably apply substantially the same pressing forces to the guide rail from opposite sides. Further, rotary driving forces are transmitted to the pair of the drive rollers by the pair of the reverse rollers and therefore the pair of the drive rollers transmit substantially the same rotary driving forces to opposite sides of the guide rail. Thus, the pair of the drive rollers can stably transmit the rotary driving forces to the guide rail. As a result, it is possible to stably move the friction drive unit with respect to the guide rail. Moreover, the pair of the drive rollers sandwich the guide rail between them and therefore equal forces are applied to the guide rail to thereby suppress deflection of the table.

If the two arm portions are provided integrally, it is possible to attach them as one member to the table or a base member to thereby facilitate assembly. If the two arm portions are provided separately, the two arm portions on which the drive rollers are pivoted are separately fixed to the table or the base member. Therefore, the pair of the drive rollers can adapt to and sandwich the guide rails having various widths with the predetermined pressing forces.

The two arm portions above may be provided so that an inside width between the pair of the drive rollers becomes smaller than a width of the guide rail sandwiched between the pair of the drive rollers.

According to the above structure, when the pair of the drive rollers are attached to the guide rail, the pair of the drive rollers receive resilience of the respective arm portions and press the guide rail with substantially the same pressing forces from opposite sides.

The two arm portions above may be tightened together by a tightening portion for adjusting a space between the arm portions.

According to the above structure, the pressing forces of the pair of drive rollers on the guide rail can be adjusted.

The guide rail above may be one single round shaft guide rail or a plurality of parallel-disposed round shaft guide rails.

According to the above structure, because the round shaft guide rail is used, state of contact between the round shaft guide rail and the pair of the drive rollers do not change even when circumferential twist occurs on the round shaft guide rail. Therefore, the pair of the drive rollers can stably apply pressing forces to the round shaft guide rail and, as a result, the friction drive unit 1 moves stably. Moreover, by using the round shaft guide rail, it is possible to manufacture the guide rail with low cost and high precision.

The guide rail above may be a round shaft guide rail having flat face portions at portions to be in contact with the drive rollers.

According to the above structure, because the round shaft guide rail having flat face portions can be manufactured by flattening parts of a hardened shaft, it is possible to reduce the cost of manufacturing.

The two arm portions may include oil retaining layers retaining lubricant, respectively and the lubricant may be supplied to one or both of the pair of the drive rollers and the pair of the reverse rollers from the oil retaining layers by capillary action.

According to the above structure, the lubricant is supplied at an extremely low rate to the drive rollers and the reverse rollers by capillary action upon rotation of the rollers. Thus, the driving force is transmitted by friction transmission in a semi-dried state due to the lubricant in each portion of the drive rollers, the reverse rollers and the guide rail. By supplying the lubricant, wearing of the members such as the drive rollers, the guide rail and the reverse rollers is lessened. If the traction oil is used as the lubricant, it is possible not only to lessen the wearing but also to suppress reduction in the friction transmitting force.

The above roller shaft on a drive source side may be a hollow shaft having a slit at one end portion on the drive source side, and a drive shaft of the drive source may be inserted into the hollow shaft.

According to the above structure, it is possible to assemble the driving unit easily. Further, the roller shaft is reliably connected to the drive shaft when connecting the drive shaft of the drive source and the roller shaft of the drive roller on the drive source side.

The arm portions above may be attached to the table or a base member.

According to the above structure, in a case that the two arm portions are attached to the table, it is possible to move the friction drive unit and the table connected to the friction drive unit. On the other hand, in a case that the two arm portions are attached to the base member, it is possible to move the guide rail and the table connected to the guide rail.

The drive unit above may further includes a position detecting portion for detecting a position of the table arranged parallel to the rail and a control portion for controlling movement of the table position by feeding back detected positional information on the table to the drive source.

According to the above structure, a positional error due to slip between the guide rail and the drive rollers can be corrected to thereby achieve positional control with high precision.

(ii) According to another aspect of the invention, there is provided a friction drive unit for moving a table along a rail comprising:
a pair of drive rollers for sandwiching a guide rail therebetween, one of the pair of the drive rollers being connected to a drive source;
a pair of reverse rollers attached to roller shafts of the respective drive rollers so as to transmit rotation of the one drive roller connected to the drive source to the other drive roller;
two arm portions being swingable, the pair of the drive rollers being pivoted on the arm portions, respectively; and
a tightening portion for tightening the two arm portions together so that the pair of the drive rollers produce pressing forces to the guide rail by adjusting a space between both of the arm portions.

According to the above structure, because the two swingable arm portions are used, it is possible to adjust a space between the arm portions by using the tightening portion. Therefore, the pressing forces of the pair of the drive rollers to the guide rail can be adjusted freely by a degree of tightening of the tightening portion.

Further, rotary driving forces are transmitted to the pair of the drive rollers by the pair of the reverse rollers and therefore the pair of the drive rollers transmit substantially the same rotary driving forces to opposite sides of the guide rail. Thus, the pair of the drive rollers can stably transmit the rotary driving forces to the guide rail. As a result, it is possible to stably move the friction drive unit with respect to the guide rail. Moreover, the pair of the drive rollers sandwich the guide rail therebetween and therefore equal forces are applied to the guide rail to thereby suppress deflection of the table.

If the two arm portions are provided integrally, it is possible to attach them as one member to the table or the base member to thereby facilitate assembly. If the two arm portions are provided separately, the two arm portions on which the drive rollers are pivoted are separately fixed to the table or the base member. Therefore, the pair of the drive rollers can adapt to and sandwich each of the guide rails of various widths with the predetermined pressing forces.

The guide rail above may be one single round shaft guide rail or a plurality of parallel-disposed round shaft guide rails.

According to the above structure, because the round shaft guide rail is used, state of contact between the round shaft guide rail and the pair of the drive rollers do not change even when circumferential twist occurs on the round shaft guide rail. Therefore, the pair of the drive rollers can stably apply pressing forces to the round shaft guide rail and, as a result, the friction drive unit 1 moves stably. Moreover, by using the round shaft guide rail, it is possible to manufacture the guide rail with low cost and high precision.

The guide rail above may be a round shaft guide rail having flat face portions at portions to be in contact with the drive rollers.

According to the above structure, because the round shaft guide rail having flat face portions can be manufactured by flattening parts of a hardened shaft, it is possible to reduce the cost of manufacturing.

The two arm portions may include oil retaining layers retaining lubricant, respectively and the lubricant may be supplied to one or both of the pair of the drive rollers and the pair of the reverse rollers from the oil retaining layers by capillary action.

According to the above structure, the lubricant is supplied at an extremely low rate to the drive rollers and the reverse rollers by capillary action upon rotation of the rollers. Thus, the driving force is transmitted by friction transmission in a semi-dried state due to the lubricant in each portion of the drive rollers, the reverse rollers and the guide rail. By supplying the lubricant, wearing of the members such as the drive rollers, the guide rail and the reverse rollers is lessened. If the traction oil is used as the lubricant, it is possible not only to lessen the wearing but also to suppress reduction in the friction transmitting force.

The above roller shaft on a drive source side may be a hollow shaft having a slit at one end portion on the drive source side, and a drive shaft of the drive source may be inserted into the hollow shaft.

According to the above structure, it is possible to assemble the driving unit easily. Further, the roller shaft is reliably connected to the drive shaft when connecting the drive shaft of the drive source and the roller shaft of the drive roller on the drive source side.

The arm portions above may be attached to the table or a base member.

According to the above structure, in a case that the two arm portions are attached to the table, it is possible to move the friction drive unit and the table connected to the table. On the other hand, in a case that the two arm portions are attached to the base member, it is possible to move the guide rail and the table connected to the guide rail.

The drive unit above may further includes a position detecting portion for detecting a position of the table arranged parallel to the rail and a control portion for controlling movement of the table position by feeding back detected positional information on the table to the drive source.

According to the above structure, a positional error due to slip between the guide rail and the drive rollers can be corrected to thereby achieve positional control with high precision.

(iii) According to yet another aspect of the invention, there is provided a friction drive unit for moving a table along a rail comprising:
a single drive roller connected to a drive source, the drive roller producing a pressing force to an upper face of the rail fixed onto a base member; and
a housing attached to the table through an attaching portion protruding sideways,
wherein the housing supports the drive source and pivots the drive roller and
the attaching portion of the housing is provided so that the drive roller produces the pressing force to the rail by resilient deformation of the housing in the vertical direction.

The rail against which the drive roller is pressed may be the same rail as or different from the rail for the table.

According to the above structure, because one single drive roller is used, the slide guide receives a reaction force of the pressing force to the rail. That is, the slide guide in the friction drive unit of (iii) works same as the other drive roller receiving a reaction force generated by one drive roller connected to the drive source in the friction drive unit of (i) or (ii). Thus , the drive roller can apply the pressing force to the rail stably. As a result, the table attached to the drive unit can move smoothly and stably.

The rail against which the drive roller is pressed may be the same rail as or different from the rail for the table.

The friction drive unit above may further include a tightening portion which is attached to the table and is resiliently deformable, wherein the tightening portion may be brought in contact with the upper face of the housing so as to press the housing downward.

According to the above structure, the pressing forces of the drive rollers pivoted on the housing on the rail can be adjusted by means of a degree of tightening of the tightening portion.

The above housing may include oil retaining layer retaining lubricant and the lubricant may be supplied to the drive roller and the rail from the oil retaining layer by capillary action.

According to the above structure, the lubricant is supplied at an extremely low rate to the drive roller and the rail by capillary action upon rotation of the roller. Thus, the driving force is transmitted by friction transmission in a semi-dried state due to the lubricant in each portion of the drive roller and the rail. By supplying the lubricant, wearing of the members such as the drive rollers guide rail is lessened. If the traction oil is used as the lubricant, it is possible not only to lessen the wearing but also to suppress reduction in the friction transmitting force.

The above roller shaft on a drive source side may be a hollow shaft having a slit at one end portion on the drive source side, and a drive shaft of the drive source may be inserted into the hollow shaft.

According to the above structure, it is possible to assemble the driving unit easily. Further, the roller shaft is reliably connected to the drive shaft when connecting the drive shaft of the drive source and the roller shaft of the drive roller.

The drive unit above may further includes a position detecting portion for detecting a position of the table arranged parallel to the rail and a control portion for controlling movement of the table position by feeding back detected positional information on the table to the drive source.

According to the above structure, a positional error due to slip between the guide rail and the drive rollers can be corrected to thereby achieve positional control with high precision.

As described above, according to the friction drive units of the invention, it is possible not only to stably move the table without slip but also to lessen noise and vibration upon movement and further to position the table without backlash. Moreover, it is possible to suppress affects due to deformations of the rail and the guide rail and low precisions of processing and assembling.

Although the present invention has been described in detail, the foregoing descriptions are merely exemplary at all aspects, and do not limit the present invention thereto. It should be understood that an enormous number of unillustrated modifications may be assumed without departing from the scope of the present invention.

## Claims

1. A friction drive unit for moving a table along a rail comprising:
a pair of drive rollers for sandwiching a guide rail therebetween, one of the pair of the drive rollers being connected to a drive source;
a pair of reverse rollers attached to roller shafts of the respective drive rollers so as to transmit rotation of the one drive roller connected to the drive source to the other drive roller; and
two arm portions formed integrally with or separately from one another, the pair of the drive rollers being pivoted on the arm portions, respectively,
wherein the two arm portions are resiliently deformable in such directions as to approach and move away from each other and are provided so that the pair of the drive rollers produce pressing forces to the guide rail.

2. A friction drive unit according to claim 1,
wherein the two arm portions are provided so that an inside width between the pair of the drive rollers becomes smaller than a width of the guide rail sandwiched between the pair of the drive rollers.

3. A friction drive unit according to claim 1 or 2,
wherein the two arm portions are tightened together by a tightening portion for adjusting a space between the arm portions.

4. A friction drive unit according to one of the preceding claims,
wherein the guide rail is one single round shaft guide rail or a plurality of parallel-disposed round shaft guide rails.

5. A friction drive unit according to one of the preceding claims,
wherein the guide rail is a round shaft guide rail having flat face portions at portions to be in contact with the drive rollers.

6. A friction drive unit according to one of the preceding claims,
wherein the two arm portions further include oil retaining layers retaining lubricant, respectively and
the lubricant is supplied to the pair of the drive rollers and/or the pair of the reverse rollers from the oil retaining layers by capillary action.

7. A friction drive unit according to one of the preceding claims,
wherein the roller shaft on a drive source side is a hollow shaft having a slit at one end portion on the drive source side and
a drive shaft of the drive source is inserted into the hollow shaft.

8. A friction drive unit according to one of the preceding claims,
wherein the arm portions are attached to one of the table and a base member.

9. A friction drive unit according to one of the preceding claims, further comprising:
a position detecting portion for detecting a position of the table arranged parallel to the rail; and
a control portion for controlling movement of the table by feeding back detected positional information on the table to the drive source.

10. A friction drive unit for moving a table along a rail comprising:
a pair of drive rollers for sandwiching a guide rail therebetween, one of the pair of the drive rollers being connected to a drive source;
a pair of reverse rollers attached to roller shafts of the respective drive rollers so as to transmit rotation of the one drive roller connected to the drive source to the other drive roller;
two arm portions being swingable, the pair of the drive rollers being pivoted on the arm portions, respectively; and
a tightening portion for tightening the two arm portions together so that the pair of the drive rollers produce pressing forces to the guide rail by adjusting a space between both of the arm portions.

11. A friction drive unit according to claim 10,
wherein the guide rail is one single round shaft guide rail or a plurality of parallel-disposed round shaft guide rails.

12. A friction drive unit according to claim 10 or 11,
wherein the guide rail is a round shaft guide rail having flat face portions at portions to be in contact with the drive rollers.

13. A friction drive unit according to claim 10, 11 or 12,
wherein the two arm portions further include oil retaining layers retaining lubricant, respectively and
the lubricant is supplied to the pair of the drive rollers and/or the pair of the reverse rollers from the oil retaining layers by capillary action.

14. A friction drive unit according to claim 10, 11, 12 or 13,
wherein the roller shaft on a drive source side is a hollow shaft having a slit at one end portion on the drive source side and
a drive shaft of the drive source is inserted into the hollow shaft.

15. A friction drive unit according to claim 10, 11, 12, 13 or 14,
wherein the arm portions are attached to one of the table and a base member.

16. A friction drive unit according to one of the preceding claims 10 to 15, further comprising:
a position detecting portion for detecting a position of the table arranged parallel to the rail; and
a control portion for controlling movement of the table by feeding back detected positional information on the table to the drive source.

17. A friction drive unit for moving a table along a rail comprising:
a single drive roller connected to a drive source, the drive roller producing a pressing force to an upper face of the rail fixed onto a base member; and
a housing attached to the table through an attaching portion protruding sideways,
wherein the housing supports the drive source and pivots the drive roller and
the attaching portion of the housing is provided so that the drive roller produces the pressing force to the rail by resilient deformation of the housing in the vertical direction.

18. A friction drive unit according to claim 17, further comprising:
a tightening portion that is attached to the table and is resiliently deformable,
wherein the tightening portion is brought in contact with the upper face of the housing so as to press the housing downward.

19. A friction drive unit according to claim 17 or 18,
wherein the housing further includes an oil retaining layer retaining lubricant and
the lubricant is supplied to the drive roller from the oil retaining layer by capillary action.

20. A friction drive unit according to claim 17, 18 or 19,
wherein a roller shaft of the drive roller is a hollow shaft having a slit at one end portion on the drive source side and
a drive shaft of the drive source is inserted into the hollow shaft.

21. A friction drive unit according to claim 17, 18, 19 or 20, further comprising:
a position detecting portion for detecting a position of the table arranged parallel to the rail; and
a control portion for controlling movement of the table by feeding back detected positional information on the table to the drive source.
